# EUROPÄISCHE PATENTSCHRIFT

(11) **EP 2 698 349 B1**
(45) Veröffentlichungstag und Bekanntmachung des Hinweises auf die Patenterteilung: **17.06.2015**
(21) Anmeldenummer: 13157240.6
(22) Anmeldetag: 17.07.2012
(51) Int. Cl.: C01B 31/02, C08J 5/00, B27N 1/00, B82Y 30/00, B82Y 40/00

(54) **Verwendung von Kohlenstoffnanoröhren zur Reduzierung der Emission von flüchtigen organischen Verbindungen (VOCs)**
Nanotubes de carbone modifiés et leur utilisation pour la réduction des émissions de composés organiques volatiles (VOC)
Modified carbon nanotubes and their use for reducing the emission of volatile organic compounds (VOCs)

(43) Veröffentlichungstag der Anmeldung: 19.02.2014
(62) Teilanmeldung aus: 12176729.7
(73) Patentinhaber: Kronotec AG, 6006 Luzern (CH)
(72) Erfinder: Gier, Andreas, Dr., 66399 Mandelbachtal (DE); Borowka, Julia, Dr., 68200 Zary (PL); Hasch, Joachim, Prof.Dr., 10317 Berlin (DE)
(74) Vertreter: Morawski, Birgit

(56) Entgegenhaltungen:
- EP-A1- 2 053 075
- US-A1- 2007 298 669
- US-A1- 2009 060 815
- US-A1- 2012 041 146

## Beschreibung

Die vorliegende Anmeldung betrifft die Verwendung von Kohlenstoffnanoröhren gemäß Anspruch 1 und eine Holzwerkstoffplatte enthaltend Kohlenstoffnanoröhren gemäß Anspruch 13.

Holzwerkstoffplatten bestehen bekanntermaßen aus Lignozellulose oder lignozellulosehaltigen Materialien, wie Holzfasern oder Holzspänen. Lignozellulose umfasst als Bestandteile Zellulose, Hemizellulose und Lignin. Zellulose ist ein langkettiges Makromolekül, bestehend aus Glukoseeinheiten, Hemizellulose ein kurzkettiges, verzweigtes Makromolekül aus Pentosen und Lignin ein dreidimensionales Makromolekül aus Methoxyphenylpropaneinheiten. Zellulose und Hemizellulose bilden die Gerüstsubstanz der Zellwand, während Lignin als Füllsubstanz im Zellgerüst die Verholzung verursacht.

Im Verlaufe der Herstellung von Holzwerkstoffplatten und insbesondere bedingt durch den Herstellungsprozess der Holzspäne entstehen bzw. werden eine Vielzahl von flüchtigen organischen Verbindungen freigesetzt. Zu den flüchtigen organischen Verbindungen, auch VOCs genannt, gehören flüchtige organische Stoffe, die leicht verdampfen bzw. bereits bei niedrigeren Temperaturen, wie zum Beispiel Raumtemperatur als Gas vorliegen.

Zu den leicht flüchtigen organischen Verbindungen (VOC) werden all die Verbindungen gezählt, die leicht flüchtig sind bzw. bereits bei niedrigen Temperaturen gasförmig vorliegen. Typischerweise liegt der Siedepunkt der zu den VOCs zählenden organischen Verbindungen in einem Bereich zwischen 50 bis 260°C. Allerdings ist die Definition von VOCs länderspezifisch und variiert somit entsprechend.

Insbesondere bei der Verwendung von Bauprodukten, wie Holzwerkstoffplatten in Innenräumen stellt die Emission von leicht flüchtigen organischen Verbindungen eine besondere gesundheitliche Belastungsquelle dar.

In Deutschland erfolgt die gesundheitliche Bewertung der Emission von flüchtigen organischen Verbindungen in Innenräumen von Gebäuden durch den Ausschuss zur gesundheitlichen Bewertung von Bauprodukten (AgBB). Gemäß der vom Ausschuss erstellten Kriterien umfassen flüchtige organische Verbindungen (VOC) Substanzen im Retentionsbereich C₆ bis C₁₆ und schwerflüchtige organische Verbindungen (SVOC) Substanzen im Retentionsbereich oberhalb von C₁₆ bis C₂₂. Die leicht flüchtigen organischen Verbindungen (VOC) werden dabei entweder als Einzelstoff oder in der Summe als TVOC (Totale Volatile Organic Compound) betrachtet.

Die VOC-Emission von Bauprodukten wird üblicherweise in Prüfkammern untersucht. Der TVOC-Wert von geeigneten Bauprodukten sollte gemäß der AgBB-Kriterien nach 3 Tagen bei 10 mg/m³ oder darunter und nach 28 Tagen bei 1 mg/m³ oder darunter liegen (AgBB Bewertungsschema für VOC aus Bauprodukten, 2010).

Vergleichbare Richtlinien wurden vom Bundesumweltamt erstellt, gemäß derer eine VOC-Emission von kleiner als 300 µg/m³ als hygienisch unbedenklich eingestuft wurde (Umweltbundesamt 2007, Bundesgesundheitsblatt 7, S. 999-1005).

In der holzverarbeitenden Industrie sind insbesondere die leicht flüchtigen organischen Aldehyde, wie Formaldehyd oder Hexanal, sowie die leicht flüchtigen Terpene von besonderer Bedeutung.

Entsprechend betrifft die vorliegende Anmeldung die Reduzierung von Aldehyden und Terpenen, insbesondere Monoterpenen. Aldehyde, wie Hexanal entstehen dabei entweder aus den natürlichen Bestandteilen im Holz oder durch einen oxidativen Abbau der natürlichen Fette. Terpene sind im natürlichen Holzbestandteil Harz enthalten.

Generell fallen die flüchtigen organischen Verbindungen entweder als Nebenprodukte während des Herstellungsprozesses an oder sie werden während der Nutzung des Produktes langsam an die Umgebungsluft abgegeben. Beide Vorgänge führen zu spezifischen Problemen, die den gesamten Herstellungsprozess verteuern können und/oder zu Geruchsbelästigungen in der Nutzung der Holzfaserplatten führen können.

Die flüchtigen organischen Verbindungen VOC sind entweder bereits im Holzmaterial vorhanden und werden während der Aufarbeitung aus diesem abgegeben oder sie werden nach derzeitigem Erkenntnisstand durch den Abbau von ungesättigten Fettsäuren gebildet, die wiederum Zersetzungsprodukte des Holzes sind. Typische Umwandlungsprodukte, die während der Bearbeitung auftreten, sind zum Beispiel Pentanal und Hexanal, aber auch Octanal, Octenal oder 1-Heptenal. Insbesondere Nadelhölzer, aus denen vorwiegend mitteldichte Faserplatten oder OSB-Platten hergestellt werden, enthalten große Mengen an Harz und Fetten, die zur Bildung von flüchtigen organischen Terpenverbindungen und Aldehyden führen. VOC und Aldehyde, wie Formaldehyd, können jedoch auch bei der Verwendung bestimmter Klebstoffe für die Herstellung der Holzwerkstoffe entstehen.

Bei der VOC-Emission liegen entsprechend ausschließlich holzbedingte Freisetzungen vor, die sich in Primäremissionen von leicht flüchtigen Holzinhaltstoffen, wie Terpenen oder chemischen Abbauprodukten, wie Essigsäure und so genannte Sekundäremissionen, wie zum Beispiel höhere Aldehyde, wie Pentanal oder höhere Carbonsäuren untergliedern.

Die VOC-Emission kann je nach Verwendung der Holzwerkstoffplatten wie z.B. in Form von OSB-Platten und je nach Raumbeladung ein erhebliches Problem darstellen. Im Übrigen stellt die Emission von VOCs einen Nachteil für den an sich ökologischen Holzfaserdämmstoff im Vergleich zu anderen, beispielsweise mineralischen Dämmstoffen, dar.

Aus den genannten Gründen ist es daher erstrebenswert, die Freisetzung von flüchtigen organischen Verbindungen aus Holzwerkstoffplatten zu reduzieren.

Verschiedene Ansätze hierfür wurden in der Vergangenheit gewählt. So beschreibt die DE 10 2007 050 935 A1 ein Verfahren zur Herstellung von Holzwerkstoffen, wobei den Holzfasern vor dem Verpressen ein glutenhaltiger Klebstoff, ein milchproteinhaltiger Klebstoff, ein pflanzenproteinhaltiger Klebstoff oder Derivate dieser Klebstoffe zugesetzt werden. Glutenhaltige Klebstoffe sind Hautleim, Knochenleim, Lederleim; milchproteinhaltige Klebstoffe sind unter anderem Kaseinklebstoffe und pflanzenproteinhaltige Klebstoffe sind unter anderem Sojaklebstoffe.

In der US 2009/0130474 A1 werden Aldehyd-Fänger zu einem Holzmaterial oder Bindematerial zugegeben. Als typischer Aldehyd-Fänger werden hier Bisulfite, Pyrosulfite, wie zum Beispiel Natriumhydrogensulfit, Kaliumhydrogensulfit, Zinksulfit, Magnesiumsulfit oder Aluminiumsulfit, und Dithionite beschrieben.

Gemäß der WO 2010/136106 wird während der Herstellung von Holzwerkstoffprodukten dem Gemisch aus Holzfasern und Klebstoff ein Zeolith als Aldehyd-Fänger zugegeben. Bei Verwendung von Zeolithen als Aldehyd-Fänger ergeben sich jedoch einige Nachteile. So müssen z.B. relativ hohe Mengen von etwa 5% auf atro Holz eingesetzt werden.

Der vorliegenden Erfindung liegt die technische Aufgabe zugrunde, die Emissionen, das heißt, die Emission an leicht flüchtigen organischen Verbindungen (VOCs), wie den Aldehyden und Terpenen aus Holzwerkstoffplatten wie z.B. OSB-Platten langfristig auf ein möglichst niedriges Niveau zu reduzieren.

Die gestellte Aufgabe wird durch die Verwendung von Kohlenstoffnanoröhren mit den Merkmalen des Anspruchs 1 gelöst.

Entsprechend werden gemäß der vorliegenden Erfindung Kohlenstoffnanoröhren zur Reduzierung der Emission von flüchtigen organischen Verbindungen (VOC) in Holzwerkstoffplatten verwendet.

Kohlenstoffnanoröhren sind große Makromoleküle in Form von Graphitfilmen (ein hexagonales Gitter mit sp²-Konfiguration), die in Form eines Zylinders aufgerollt sind ("singlewalled carbon nanotubes", SWNT). Neben den einwandigen Kohlenstoffnanoröhren sind auch Kohlenstoffnanoröhren mit zwei oder mehreren Wänden bekannt ("double walled carbon nanotubes" DWNT; multi-walled carbon nanotubes", MWNT), wobei letztere in Form eines Zylinders eingebracht in einem weiteren Zylinder beschrieben werden können.

Kohlenstoffnanoröhren zeichnen sich durch eine hohe Festigkeit, ein geringes Gewicht, eine spezifische elektronische Struktur, eine hohe Stabilität und eine hervorragende thermische Leitfähigkeit aus. So kann die thermische Leitfähigkeit von Kohlenstoffnanoröhren bei Raumtemperatur zwischen 1800 bis 6000 W/m*K liegen (Hone et al., Synthetic metals, 1999, 103: 2498). Die thermische Leitfähigkeit einer (10, 10) Kohlenstoffnanoröhre kann Werte von 2980 W/m*K mit ansteigendem angelegten Strom erreichen (Che et al., Nanotechnology, 2000, 11:65).

Es ist bekannt, Kohlenstoffnanoröhren zur Stabilisierung und Dispergierbarkeit zu modifizieren. So beschreibt US 2007/0298669 A1 die Modifizierung von Kohlenstoffnanoröhren mit Amino- und Epoxid-funktionalisierten Silanverbindungen. Aus der US2009/0060815 A1 sind ebenfalls Silan-modifizierte Kohlenstoffnanoröhren bekannt.

Es ist auch bekannt Kohlenstoffnanoröhren Polymeren zuzusetzen. So beschreibt US 2012/0041146 A1 Phenol-Formaldehyd-Polymer-Komposite aus einer phenolischen Verbindung, Formaldehyd, einer Base, Kohlenstoffnanoröhren und ggf. Lignin. Die Kohlenstoffnanoröhren können mit Phenol-Gruppen modifiziert sein. Die Verwendung von Kohlenstoffnanoröhren dient insbesondere der Verstärkung der phenolischen Harzmatrix.

In einer Ausführungsform der vorliegenden Erfindung kommen modifizierte Kohlenstoffnanoröhren mit mindestens einer Gruppe der allgemeinen Formel (I)

- **SiRₐX₍₃₋ₐ₎** (I),

zum Einsatz, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NHunterbrochen sein können, und
- wobei R ggf. mindestens eine funktionelle Gruppe Q aufweist, die ausgewählt ist aus einer Gruppe enthaltend eine Aryl-, Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy-, Isocyanato-, Aldehyd-, Alkylcarbonyl-, Säureanhydrid- und/oder Phosphorsäuregruppe, und
- a = 0, 1, 2, insbesondere 1 oder 2 ist.

In einer Ausführungsform der modifizierten Kohlenstoffnanoröhren ist die mindestens eine Gruppe der allgemeinen Formel (I) über mindestens eine Linkergruppe an der Oberfläche der Kohlenstoffnanoröhren gebunden.

Die mindestens eine Linkergruppe kann dabei ausgewählt sein aus der Gruppe enthaltend - CO₂- -CO-, -CONH-, -C₆H₄CO₂-, -C₆H₄CO-, -C₆H₄CONH- aufweisen.

Eine weitere Linkergruppe kann eine Alkylkette gemäß -(CₙH₂ₙ)-, eine Alkenkette gemäß - (CₙH₂ₙ₋₁)- und/oder eine Alkinkette gemäß -(CₙH₂ₙ₋₂)- sein, wobei n≥1, bevorzugt 2-20, insbesondere bevorzugt 2-10 ist.

Denkbar sind auch Linkergruppen ausgewählt aus einer Gruppe enthaltend Peptidoligomere, Verbindungen mit Peptidbindungen wie z.B. -R'-CO-NH-R"-, wobei R', R' jede beliebige organische Gruppe sein kann, bevorzugt eine der oben angeführten Reste X, R, Q; Nukleotidoligomere, Polyetheroligomere, Polyethylenglykol, Polyamine etc.

Die vorliegenden Kohlenstoffnanoröhren weisen somit bevorzugt auf ihrer Oberfläche eine über eine geeignete Linkergruppe gebundene silanhaltige Verbindung bzw. Gruppe gemäß der allgemeinen Formel (I) auf. So kann eine Silanverbindung wie z.B. Tetraethoxysilan über eine Carboxylgruppe als Linkergruppe an die Oberfläche der Kohlenstoffnanoröhren unter Ausbildung einer -CO₂-Si(OCH₃)₃ gebunden werden. Letztere Ausführungen dienen dabei lediglich der Verdeutlichung der Struktur und sind nicht als Limitierung gedacht.

Die angeführten Linkerstrukturen können beliebig mit weiteren chemischen Verbindungen substituiert bzw. verlängert werden, so dass der Abstand zwischen der Oberfläche der Kohlenstoffnanoröhren und der Silangruppe gezielt einstellbar ist.

Die verwendeten Kohlenstoffnanoröhren weisen bevorzugt einen Durchmesser zwischen 0,2 und 100 nm auf, wobei das Seiten-Längenverhältnis nicht größer ist als 1,000,000. Die thermische Leitfähigkeit der verwendeten Kohlenstoffnanoröhren beträgt mindestens 10 W/m K.

Der Rest X ist vorteilhafterweise ausgewählt aus einer Gruppe enthaltend Fluor, Chlor, Brom, Iod, C₁₋₆-Alkoxy, insbesondere Methoxy, Ethoxy, n-Propoxy und Butoxy, C₆₋₁₀-Aryloxy, insbesondere Phenoxy, C₂₋₇Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

Der nicht-hydrolisierbare Rest R ist bevorzugt ausgewählt aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₃-C₈-Cycloalkyl und substituiertes und nicht-substituiertes C₃-C₈-Cycloalkenyl. Bei Verwendung von Cycloalkyl und Cycloalkenyl- Resten sind diese bevorzugt mittels eines C₁-C₁₀, insbesondere eines C₁-C₆ Alkyl-Linkers am Si-Atom gebunden. Auch ist es denkbar, dass bei Verwendung von Alkenyl- oder Cycloalkenyl- Gruppen als Rest R diese nicht unbedingt eine funktionelle Gruppe Q aufweisen müssen. In diesen Fällen wäre Q entsprechend H.

In einer Ausführungsform ist der nicht-hydrolisierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, substituiertes und nicht- substituiertes Butadienyl oder substituiertes und nicht-substituiertes Cyclohexadienyl.

Unter dem Begriff "nicht-hydrolysierbarer organischer Rest" ist im Rahmen der vorliegenden Anmeldung ein organischer Rest zu verstehen, der in Gegenwart von Wasser nicht zur Bildung einer mit dem Si-Atom verknüpften OH-Gruppe oder NH₂-Gruppe führt.

Die mindestens eine funktionelle Gruppe Q, die im organischen nicht-hydrolisierbaren Rest enthalten sein kann, umfasst bevorzugt eine Aminogruppe, eine Monoalkylaminogruppe, eine Arylgruppe, insbesondere eine Phenylgruppe, eine Hydroxygruppe, eine Acrylgruppe, Acryloxygruppe, Methacrylgruppe oder eine Methacryloxygruppe, eine Epoxid-, insbesondere ein Glycidyl- oder Glycidyloxy-Gruppe, und/oder eine Isocyano-Gruppe. Besonders bevorzugt ist als funktionelle Gruppe Q eine Aminogruppe, eine Epoxidgruppe Hydroxygruppe und/oder Phenylgruppe.

Für den Fall, dass der organische nicht-hydrolisierbare Rest R keine funktionelle Gruppe Q aufweist, ist Q als Wasserstoff zu betrachten.

Wie beschrieben, kann der nicht-hydrolisierbare Rest R über mindestens eine funktionelle Gruppe Q verfügen. Darüber hinaus kann der Rest R auch mit weiteren Resten substituiert vorliegen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet bevorzugt einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet bevorzugt aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten substituiert sind.

Der Begriff "Cycloalkyl" umfasst bevorzugt die Gruppen Cyclopropyl, Cyclobutyl, Cyclopentyl, Cyclohexyl und Cycloheptyl.

Der Begriff "Cycloalkenyl" umfasst bevorzugt substituierte oder nicht-substituierte cyclische Gruppen wie Cyclopentenyl oder Cyclohexenyl. Auch werden vom dem Begriff "Cycloalkenyl" cyclische Gruppen mit konjugierten Doppelbindungen wie z.B Cyclohexadiene abgedeckt.

Der Begriff "Alkenyl" umfasst im Sinne der vorliegenden Anmeldungen Gruppen mit einer oder mehreren Doppelbindungen, wobei die Doppelbindungen auch in konjugierter Form vorliegen können, wie z.B. Butadiene.

Die funktionelle Gruppe Q ist insbesondere eine Gruppe, die eine Reaktion mit einer Aldehydgruppe eingehen kann. So kann z.B. eine Aminogruppe mit einem Aldehyd unter Ausbildung einer Schiffschen Base reagieren. Auch kann eine Hydroxygruppe mit einem Aldehyd unter Ausbildung eines Acetals bzw. Hemiacetals abreagieren.

Bei Verwendung einer Arylgruppe wie z.B. einer Phenylgruppe als funktionelle Gruppe Q kann die aromatische Gruppe als Radikalfänger der im Verlaufe der Holzverarbeitung gebildeten Radikale, insbesondere von Aldehyd-Radikalen und Terpen-Radikalen, fungieren, so dass auch es auch hier zu einem Abfangen der leicht flüchtigen Aldehyde und Terpene kommt.

Der Einsatz von Alkenylen, insbesondere Alkenylen mit konjugierter Doppelbindung wie substituiertes und nicht-substitzuiertes Butadienyl oder Cycloalkenylen, insbesondere Cycloalkenylen mit konjugierter Doppelbindung wie z.B. substituiertes und nicht-substituiertes Cyclohexadienyl ermöglicht die Umsetzung von leicht flüchtigen Terpenen in einer thermischen Diels-Alder-Reaktion. Bei Auswahl von geeigneten Dienverbindungen werden dabei höhermolekulare cyclische Verbindungen gebildet, die nicht mehr flüchtig sind, und somit im Holz verbleiben.

Besonders bevorzugte Silanreste zur Modifizierung der Kohlenstoffnanoröhren basieren auf Verbindungen ausgewählt aus der Gruppe Tetraethoxysilan, Methyltriethoxysilan, N-(2-Aminoethyl)-3-aminoethylaminopropyltrimethoxysilan, [3-(2,3-Epoxypropoxy)-propyl]-triethoxysilan, Aminopropyltrimethoxysilan, Phenyltriethoxysilan.

Die sich auf der Oberfläche der Kohlenstoffnanoröhren angelagerten Silanreste bewirken zum einem eine verbesserte Dispergierbarkeit der Kohlenstoffnanoröhren in Wasser und Alkoholen und verbesserte Einarbeitung in wässrige Melaminharzlacke, da insbesondere die funktionellen Reste wie z.B. der Rest X die Hydrophilie der Kohlenstoffnanoröhren erhöhen.

Typischerweise können die erfindungsgemäßen modifizierten Kohlenstoffnanoröhren in Form von wässrigen Suspensionen mit einem Anteil von 5 bis 50 Gew%, bevorzugt 10 bis 30 Gew%, insbesondere bevorzugt 10 bis 20 Gew% vorliegen und verwendet werden.

Zum anderen ermöglicht insbesondere der Rest R eine gezielte Reaktion mit Aldehyden und Terpenen zur VOC-Emissionsreduzierung, wie oben beschrieben.

Es ist besonders bevorzugt, wenn die Kohlenstoffnanoröhren, d.h. nicht-modifizierte Kohlenstoffnanoröhren als auch die modifizierten Kohlenstoffnanoröhren, zur Reduzierung von aus in der Holzwerkstoffplatte verwendeten Holzspänen freigesetzten Aldehyden, insbesondere C₁-C₁₀ Aldehyden, insbesondere bevorzugt Formaldehyd, Acetaldehyd, Pentanal, Hexanal u.a. eingesetzt werden. Wie oben ausführlich erläutert erfolgt eine Freisetzung von Aldehyden insbesondere während der Aufarbeitung des Holzes.

Es ist ebenfalls bevorzugt, wenn nicht-modifizierte als auch die modifizierten Kohlenstoffnanoröhren zur Reduzierung von aus in der Holzwerkstoffplatte verwendeten Holzspänen freigesetzten Terpenen, insbesondere C₁₀-Monoterpene und C₁₅-Sesquiterpene, insbesondere bevorzugt acyclische oder cyclische Monoterpene eingesetzt werden.

Typische acyclische Terpene sind Terpenkohlenwasserstoffe wie Mycren, Terpenalkohole wie Geraniol, Linalool, Ipsenol und Terpenaldehyde wie Citral. Typische Vertreter der monocyclischen Terpene sind p-Methan, Terpinen, Limonen oder Carvon, und typische Vertreter der bicyclischen Terpene sind Caran, Pinan, Bornan, wobei insbesondere 3-Caren und α-Pinen von Bedeutung sind. Terpene sind Bestandteile der Baumharze und sind daher besonders in sehr harzhaltigen Baumarten wie Kiefer oder Fichte vorhanden.

Die vorliegenden modifizierten Kohlenstoffnanoröhren werden in einem Verfahren umfassend die folgenden Schritte hergestellt:
In einem ersten Schritt a) erfolgt das Mischen einer bevorzugt definierten Menge von Kohlenstoffnanoröhren mit mindestens einer chemisch reaktiven Verbindung zur Aktivierung der Oberfläche der Kohlenstoffnanoröhren.

Im Anschluss an die Oberflächenaktivierung der Kohlenstoffnanoröhren wird in Schritt b) mindestens eine Verbindung der allgemeinen Formel (II)

**RₐSiX₍₄₋ₐ₎** (II)

zugegeben, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NH- unterbrochen sein können, und
- wobei R ggf. mindestens eine funktionelle Gruppe Q aufweist, die ausgewählt ist aus einer Gruppe enthaltend eine Aryl-, Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy-, Isocyanato-, Aldehyd-, Alkylcarbonyl-, Säureanhydrid- und/oder Phosphorsäuregruppe, und
- a = 0, 1, 2, 3, insbesondere 1 oder 2 ist.

In einer Ausführungsform des vorliegenden Verfahrens ist die in Schritt a) verwendete mindestens eine chemisch reaktive Verbindung eine oxidativ wirkende Verbindung, die bevorzugt ausgewählt ist aus einer Gruppe enthaltend anorganische Säuren und organische Säuren.

So werden als anorganische Säuren bevorzugt Schwefelsäure, Salpetersäure, Phosphorsäure, Salzsäure, Perchlorsäure und andere, wobei die Verwendung von Schwefelsäure und Salpetersäure und insbesondere die Verwendung einer Mischung von Schwefelsäure und Salpetersäure z.B. im Verhältnis 3:1 (v/v) bevorzugt ist.

Als geeignete organische Säuren zur Aktivierung der Oberfläche der Kohlenstoffnanoröhren können Sulfonsäuren wie z.B. p-Toluolsulfonsäure, subst. Benzoesäuren wie z.B. 4-Aminobenzoesäure, Salpetersäure und andere verwendet werden.

Nach Zugabe der Kohlenstoffnanoröhren zu dem geeigneten Oxidationsmittel in Schritt a) werden die so erhaltenen, insbesondere wässrigen Mischungen erwärmt und bei Temperaturen unterhalb des Siedepunktes von Wasser, insbesondere bei Temperaturen zwischen 70 und 90°C, bevorzugt 80°C für einen vorbestimmten Zeitraum z.B. 60 bis 120 Minuten gerührt.

Nach Abkühlung der Mischung auf z.B. Temperaturen zwischen 50 bis 60°C erfolgt die Zugabe der mindestens einen Silanverbindung der allgemeinen Formel (II) mit anschließender Reaktion für einen Zeitraum von z.B. 30 bis 90 Minuten, bevorzugt 60 Minuten.

Die so erhaltenen Dispersionen werden ggf. unter Verwendung von Ultraschall dispergiert.

Die mittels des vorliegenden Verfahrens erhaltenen Dispersionen von modifizierten Kohlenstoffnanoröhren weisen bei Raumtemperatur eine durchschnittliche Stabilität von 4 bis 8 Wochen, bevorzugt 6 Wochen auf.

Die nicht-modifizierten und modifizierten Kohlenstoffnanoröhren werden in einem Verfahren zur Herstellung einer Holzwerkstoffplatte, insbesondere einer OSB-Platte, mit einer reduzierten Emission von flüchtigen organischen Verbindungen (VOCs) verwendet, wobei das Verfahren die folgenden Verfahrensschritte umfasst:
a) Herstellen von Hackschnitzeln aus geeigneten Hölzern,
b) Zerspanen der Hackschnitzel zu Holzspänen,
c) Zwischenlagerung der Holzspäne, insbesondere in Silos oder Bunkern,
d) Trocknen der Holzspäne,
e) Sortieren bzw. Sichtung der Holzspäne entsprechend der Größe der Holzspäne,
f) ggf. weitere Zerkleinerung der Holzspäne,
g) Aufbringen der Holzspäne auf ein Transportband mittels Wind- und/oder Wurfsichtung unter Ausbildung einer Streumatte,
h) Verpressen der auf dem Transportband angeordneten Holzspäne, wobei mindestens eine Suspension enthaltend die nicht-modifizierten und die beschriebenen modifizierten Kohtenstoffanoröhren bzw. -partikel vor, während und/oder nach einem der Schritte b) bis h) zugegeben wird.

Die nicht-modifizierten bzw. modifizierten Kohlenstoffnanoröhren können also zu jedem Zeitpunkt des Herstellungsverfahrens der Holzwerkstoffplatten mit den Holzspänen vermischt werden. Es ist auch vorstellbar, dass die Suspension enthaltend die modifizierten Kohlenstoffnanoröhren an mehreren Stellen während des Verfahrens auf die Holzspäne aufgetragen wird.

Ebenfalls kann ein geeigneter Leim bzw. Klebstoff zu jedem Zeitpunkt des Herstellungsverfahrens mit den Holzspänen vermischt bzw. auf diese aufgesprüht werden.

Zusätzlich zu den oben aufgeführten Verfahrensschritten werden die Hackschnitzel bevorzugt vor ihrer Zerkleinerung von Fremdstoffen z.B. im Rahmen einer Trockenreinigung oder Nassreinigung gereinigt.

In einer Ausführungsform des Verfahrens erfolgt eine Aufteilung der hergestellten Späne in Deck- und Mittelschicht. Dies erfolgt durch eine Siebung, bei der das Spanmaterial abhängig von der Größe sortiert wird. Die Mittelschicht umfasst dabei bevorzugt kleinere Holzspäne und die Deckschicht größere Holzspäne.

Danach erfolgt in einer weiteren Ausführungsform die Beleimung der Deck- und Mittelschicht durch die Aufsprühung eines geeigneten Leims unter Hochdruck und eine anschließende Vermischung in einem Coil. Die Beleimung und Vermischung erfolgt separat von Deck- und Mittelschicht.

Die Verfahren zur Herstellung von OSB-Platten unterscheiden sich von den Verfahren zur Spanplattenherstellung oder Faserplattenherstellung insbesondere in Hinblick auf die Größe und Beschaffenheit der verwendeten Holzspäne sowie in Hinblick auf die verwendeten Drücke und Temperaturen. Der wesentliche Verfahrensablauf und damit die Reihenfolge der Verfahrensschritte sind bei allen Platten jedoch ähnlich und dem Fachmann bekannt.

Im vorliegenden Verfahren kommt bevorzugterweise eine die nicht-modifizierten oder modifizierten Kohlenstoffnanoröhren enthaltende Suspension zum Einsatz. Dabei wird bevorzugt eine Suspension in Form einer wässrigen Lösung mit einem Anteil an nicht-modifizierten oder modifizierten Kohlenstoffnanoröhren von mindestens 20 Gew%, bevorzugt von mindestens 40 Gew%, insbesondere bevorzugt von mindestens 50 Gew% verwendet.

Die Suspension enthaltend die nicht-modifizierten oder modifizierten Kohlenstoffnanoröhren kann in verschiedener Weise in die Holzwerkstoffplatte während des Herstellungsverfahrens eingeführt werden.

So kann die die nicht-modifizierten oder modifizierten Kohlenstoffnanoröhren enthaltende Suspension mit dem aufzutragenden Leim oder Klebstoff vermischt werden, gleichzeitig mit dem Leim oder Klebstoff auf die Holzspäne aufgetragen werden, auf die Holzspäne vor der Trocknung derselbigen aufgesprüht werden oder auf die Streumatte aus Holzspänen vor dem Verpressen aufgesprüht werden.

In einer Ausführungsform erfolgt somit die Zugabe der Suspension einer reinen wässrigen Kohlenstoffnanoröhren-Suspension gleichzeitig mit der Beleimung der Deckschicht- und/oder Mittelschicht.

In einer weiteren Variante erfolgt die Zugabe bzw. primäre Vermischung einer reinen wässrigen Kohlenstoffnanoröhren-Suspension mit dem Leim und die anschließende Beleimung der Späne mit dieser Mischung aus Leim mit Kohlenstoffnanoröhren. Auch ist es in diesem Zusammenhang denkbar, die wässrige Kohlenstoffnanoröhren-Suspension während der Leimproduktion einzubringen.

Auch ist es gemäß dem vorliegenden Verfahren möglich, eine Suspension einer reinen wässrigen Kohlenstoffnanoröhren-Suspension vor der Trocknung der Späne und somit vor dem Streuen zu diesen zuzugeben, z.B. mittels Aufzusprühen.

In einer noch weiteren Variante ist es möglich, die Streumatte aus Holzspänen auf der Oberfläche mit der wässrigen Kohlenstoffnanoröhren-Suspension zu besprühen.

Gegenstand der vorliegenden Erfindung ist ebenfalls eine Holzwerkstoffplatte, insbesondere eine OSB-Werkstoffplatte, herstellbar in dem oben beschriebenen Verfahren und enthaltend nicht-modifizierte oder die erfindungsgemäß modifizierten Kohlenstoffnanoröhren.

Die Erfindung wird nachfolgend anhand mehrerer Ausführungsbeispieles näher erläutert.

### Ausführungsbeispiel 1

5 g Multi Wall Carbon Nano tubes (MWCNT) der Fa Bayer (Baytubes) werden in 90 g dest. Wasser und 5 g einer Säure Mischung von H₂SO₄ conc. und HNO₃ conc. im Verhältnis 3 : 1 zugegeben. Diese Mischung wir unter Rückfluss bei 80 °C für 60 Minuten gerührt und anschließend auf 60 °C abgekühlt zu dieser Mischung werden 2,08 g Tetraethoxysilan gegeben und weitere 30 Minuten gerührt. Nach Kühlung der Dispersion auf Raumtemperatur wird das Gemisch noch einmal mit einem Ultraturrax bei 10 000 Um/min dispergiert. Die so erhaltene Dispersion ist für ca. 6 Wochen stabil.

### Ausführungsbeispiel 2

5 g Multi Wall Carbon Nano tubes (MWCNT) der Fa Bayer (Baytubes) werden in 90 g dest. Wasser und 5 g einer Säure Mischung von H₂SO₄ conc. und HNO₃ conc. im Verhältnis 3 : 1 zugegeben. Diese Mischung wir unter Rückfluss bei 80 °C für 120 Minuten gerührt und anschließend auf 60 °C abgekühlt zu dieser Mischung werden 1,78 g Methyltriethoxysilan gegeben und weitere 60 Minuten gerührt. Nach Kühlung der Dispersion auf Raumtemperatur wird das Gemisch noch einmal mit einem Ultraturrax bei 10 000 Um/min dispergiert. Die so erhaltene Dispersion ist für ca. 6 Wochen stabil.

### Ausführungsbeispiel 3

5 g Multi Wall Carbon Nano tubes (MWCNT) der Fa Bayer (Baytubes) werden in 90 g dest. Wasser und 5 g para Toluolsulfonsäure zugegeben. Diese Mischung wir unter Rückfluss bei 80 °C für 120 Minuten gerührt und anschließend auf 60 °C abgekühlt zu dieser Mischung werden 2,78 g [3-(2,3-Epoxypropoxy)-propyl]-triethoxysilan gegeben und weitere 60 Minuten gerührt. Nach Kühlung der Dispersion auf Raumtemperatur wird das Gemisch noch einmal mit einem Ultraturrax bei 10 000 Um/min dispergiert. Die so erhaltene Dispersion ist für ca. 4 Wochen stabil.

### Ausführungsbeispiel 4

5 g Multi Wall Carbon Nano tubes (MWCNT) der Fa Bayer (Baytubes) werden in 90 g dest. Wasser und 5 g para Toluolsulfonsäure zugegeben. Diese Mischung wir unter Rückfluss bei 80 °C für 120 Minuten gerührt und anschließend auf 60 °C abgekühlt zu dieser Mischung werden 2,22 g N-(2-Aminoethyl)-3-aminoproyltrimethoxysilan gegeben und weitere 60 Minuten gerührt. Nach Kühlung der Dispersion auf Raumtemperatur wird das Gemisch noch einmal mit einem Ultraturrax bei 10 000 Um/min dispergiert. Die so erhaltene Dispersion ist für ca. 4 Wochen stabil.

Alle oben genannten Ausführungsbeispiele 1-4 können in wässrige Melaminharzlacke unter Berücksichtigung der Veränderung der Härtezeit homogen eingearbeitet werden.

### Ausführungsbeispiel 5

Es wurden mehrere mit den vorliegenden modifizierten Kohlenstoffnanoröhren versehene OSB-Proben in der Mikrokammer auf ihre VOC-Emission untersucht. Bei der Probe 0 handelt es sich um die Nullprobe. Einer weiteren Probe 1 wurden nicht- modifizierte Kohlenstoffnanoröhren zugesetzt.

### Anfertigung der Laborplatten:

An der Laborpresse wurden mehrere OSB Versuchsplatten im Format 12 mm x 300 mm x 300 mm und einer Rohdichte von 650 kg/m³ hergestellt. Bei der ersten Platte 0 wurde kein Additiv hinzugefügt. Die Dosierung erfolgt nur in der Deckschicht. Dazu wurden die beleimten Strands (12% MUPF) der Produktionslinie entnommen und mit dem jeweiligen Additiv gleichmäßig vermischt und anschließend gestreut. Die Dosierung erfolgte jeweils mit 40 g Kohlenstoffnanoröhren (außer bei Probe 0) pro 140 g beleimter Deckschicht. Die Mittelschicht wurde nicht modifiziert, sondern der Linie (PMDI beleimt) entnommen.

### Ergebnisse:

Die Emission der OSB- Platten wird dabei in Form der Emissionsrate mit der Einheit [µg/m³] angegeben, wobei von einer flächenspezifischen Lüftungsrate q = 1 m³/(m²*h) ausgegangen wird.

Im Folgenden wird der Effekt der Kohlenstoffnanoröhren auf die VOC-Substanzen n-Hexanal als Vertreter der Aldehyde und 3-Caren als Vertreter der monocyclischen Terpene beschrieben.

Die Reduktionsraten von Hexanal und 3-Caren sind in der nachfolgenden Tabelle 1 zusammengefasst.

**Tabelle 1: Emissionsraten von Hexanal und 3-Caren der untersuchten Proben**

| **Probe** | **n**-**Hexanal [µg/m³]** | **3-Caren [µg/m³]** | **Gesamtemission [µg//m**³**]** |
|---|---|---|---|
| 0 | 872 | 1972 | 5302 |
| 1 | 758 (-13,07 %) | 926 (-53,04 %) | 3799 (-28,35 %) |

Eine Reduktion von n-Hexanal ist im Vergleich zur Nullprobe bei Probe 1 um 13,07 %,zu erkennen. Die Reduktion von 3-Caren liegt bei Probe 1 bei 53 %.

Die Verwendung der Kohlenstoffnanoröhren führt somit zu einer Reduzierung des emittierten Hexanals und 3-Carens.

## Patentansprüche

1. Verwendung von Kohlenstoffnanoröhren zur Reduzierung der Emission von flüchtigen organischen Verbindungen (VOCs) in Holzwerkstoffplatten.

2. Verwendung nach Anspruch 1, **dadurch gekennzeichnet, dass** die Kohlenstoffnanoröhren zur Reduzierung von aus den in der Holzwerkstoffplatte verwendeten Holzspänen freigesetzten Aldehyden, insbesondere C1-C10 Aldehyden, insbesondere bevorzugt Formaldehyd, Acetaldehyd, Pentanal, Hexanal eingesetzt werden.

3. Verwendung nach Anspruch 1 oder 2, **dadurch gekennzeichnet, dass** die Kohlenstoffnanoröhren zur Reduzierung von aus den in der Holzwerkstoffplatte verwendeten Holzspänen freigesetzten Terpenen, insbesondere C10-Monoterpene und C15-Sesquiterpene, insbesondere bevorzugt acyclische oder cyclische Monoterpene eingesetzt werden.

4. Verwendung nach einem der vorhergehenden Ansprüche, **dadurch gekennzeichnet, dass** die Oberfläche der Kohlenstoffnanoröhren mit mindestens einer Gruppe der allgemeinen Formel (I)
- **SiRₐX**₍₃₋ₐ₎ (I),
modifiziert ist, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NH- unterbrochen sein können, und
- wobei R ggf. mindestens eine funktionelle Gruppe Q aufweist, die ausgewählt ist aus einer Gruppe enthaltend eine Aryl-, Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy-, Isocyanato-, Aldehyd-, Alkylcarbonyl-, Säureanhydrid- und/oder Phosphorsäuregruppe, und
- a = 0, 1, 2, insbesondere 1 oder 2 ist.

5. Verwendung nach Anspruch 4, **dadurch gekennzeichnet, dass** die mindestens eine Gruppe der allgemeinen Formel (I) über mindestens eine Linkergruppe L an der Oberfläche der Kohlenstoffnanoröhren gebunden ist.

6. Verwendung nach Anspruch 4 oder 5, **dadurch gekennzeichnet, dass** die mindestens eine Linkergruppe L ausgewählt aus der Gruppe enthaltend -CO₂-, -CO-, -CONH-, -C₆H₄CO₂-, - C₆H₄CO-, -C₆H₄CONH-, eine Alkylkette gemäß -(CₙH₂ₙ)-, eine Alkenkette gemäß -(CₙH₂ₙ₋₁)- und/oder eine Alkinkette gemäß -(CₙH₂ₙ₋₂)- sein, wobei n≥1, bevorzugt 2-20, insbesondere bevorzugt 2-10 ist.

7. Verwendung nach einem der Ansprüche 4 bis 6, **dadurch gekennzeichnet, dass** X ausgewählt ist aus einer Gruppe enthaltend Fluor, Chlor, Brom, Iod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆.

8. Verwendung nach einem der Ansprüche 4 bis 7, **dadurch gekennzeichnet, dass** R ausgewählt ist aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₃-C₈-Cycloalkyl und substituiertes und nicht-substituiertes C₃-C₈-Cycloalkenyl.

9. Verwendung nach einem der Ansprüche 4 bis 8, **dadurch gekennzeichnet, dass** R ausgewählt ist aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, substituiertes und nicht-substitzuiertes Butadienyl oder substituiertes und nicht-substituiertes Cyclohexadienyl.

10. Verwendung nach einem der Ansprüche 4 bis 9, **dadurch gekennzeichnet, dass** die funktionelle Gruppe Q eine Aminogruppe, eine Monoalkylaminogruppe, eine Arylgruppe, insbesondere eine Phenylgruppe, eine Hydroxygruppe, eine Acrylgruppe, Acryloxygruppe, Methacrylgruppe oder eine Methacryloxygruppe, eine Epoxid-, insbesondere ein Glycidyl- oder Glycidyloxy-Gruppe, und/oder eine Isocyano-Gruppe ist.

11. Verwendung nach einem der Ansprüche 4 bis 10, **dadurch gekennzeichnet, dass** die funktionelle Gruppe Q eine Aminogruppe, eine Epoxidgruppe, eine Hydroxygruppe und/oder Phenylgruppe ist.

12. Verwendung nach einem der vorhergehenden Ansprüche, **dadurch gekennzeichnet, dass** die Kohlenstoffnanoröhren (CNT) einwandige Kohlenstoffnanoröhren (SWNT), zweiwandige Kohlenstoffnanoröhren (DWNT) oder mehrwandige Kohlenstoffnanoröhren (MWNT) sind.

13. Holzwerkstoffplatte, insbesondere eine Holzspanplatte und/oder Holzfaserplatte, umfassend modifizierte Kohlenstoffnanoröhren nach einem der Ansprüche 4 bis 12.

## Claims

1. Use of carbon nanotubes for reducing the emission of volatile organic compounds (VOCs) in wood material boards.

2. Use according to Claim 1, **characterized in that** the carbon nanotubes are used for reducing the level of aldehydes released from the woodchips used in the wood material board, especially of C1-C10 aldehydes, especially preferably formaldehyde, acetaldehyde, pentanal, hexanal.

3. Use according to Claim 1 or 2, **characterized in that** the carbon nanotubes are used for reducing the level of terpenes released from the woodchips used in the wood material board, especially C10 monoterpenes and C15 sesquiterpenes, especially preferably acyclic or cyclic monoterpenes.

4. Use according to any one of the preceding claims, **characterized in that** the surface of the carbon nanotubes has been modified with at least one group of the general formula (I)
**-SiRₐX**₍₃₋ₐ₎ (I)
where
- X is H, OH or a hydrolysable radical selected from the group encompassing halogen, alkoxy, carboxyl, amino, monoalkylamino or dialkylamino, aryloxy, acyloxy, alkylcarbonyl,
- R is a non-hydrolysable organic radical R selected from the group encompassing substituted and unsubstituted alkyl, substituted and unsubstituted aryl, substituted and unsubstituted alkenyl, substituted and unsubstituted alkynyl, substituted and unsubstituted cycloalkyl, substituted and unsubstituted cycloalkenyl, each of which may be interrupted by -O- or -NH-, and
- where R optionally has at least one functional group Q selected from a group containing an aryl, epoxy, hydroxyl, ether, amino, monoalkylamino, dialkylamino, substituted and unsubstituted anilino, amide, carboxyl, alkynyl, acryloyl, acryloyloxy, methacryloyl, methacryloyloxy, mercapto, cyano, alkoxy, isocyanato, aldehyde, alkylcarbonyl, acid anhydride and/or phosphoric acid group, and
- a = 0, 1, 2, especially 1 or 2.

5. Use according to Claim 4, **characterized in that** the at least one group of the general formula (I) is bonded to the surface of the carbon nanotubes via at least one linker group L.

6. Use according to Claim 4 or 5, **characterized in that** the at least one linker group L is selected from the group comprising -CO₂-, -CO-, -CONH-, -C₆H₄CO₂-, -C₆H₄CO-,-C₆H₄CONH-, an alkylene chain according to -(CₙH₂ₙ)-, an alkenylene chain according to - (CₙH₂ₙ₋₂) - and/or an alkynylene chain according to - (CnH₂ₙ₋₄) -, where n ≥ 1, preferably 2-20, especially preferably 2-10.

7. Use according to any one of Claims 4 to 6, **characterized in that** X is selected from a group comprising fluorine, chlorine, bromine, iodine, C₁₋₆-alkoxy, especially methoxy, ethoxy, n-propoxy and butoxy, C₆₋₁₀-aryloxy, especially phenoxy, C₂₋₇-acyloxy, especially acetoxy or propionoxy, C₂₋₇-alkylcarbonyl, especially acetyl, monoalkylamino or dialkylamino having C₁ to C₁₂, especially C₁ to C₆.

8. Use according to any one of Claims 4 to 7, **characterized in that** R is selected from a group encompassing substituted and unsubstituted C₁-C₃₀-alkyl, especially C₅-C₂₅-alkyl, substituted and unsubstituted C₂-C₆-alkenyl, substituted and unsubstituted C₃-C₈-cycloalkyl and substituted and unsubstituted C₃-C₈-cycloalkenyl.

9. Use according to any one of Claims 4 to 8, **characterized in that** R is selected from the group comprising methyl, ethyl, n-propyl, isopropyl, n-butyl, s-butyl, t-butyl, pentyl, hexyl, cyclohexyl, vinyl, 1-propenyl, 2-propenyl, butenyl, acetylenyl, propargyl, substituted and unsubstituted butadienyl and substituted and unsubstituted cyclohexadienyl.

10. Use according to any one of Claims 4 to 9, **characterized in that** the functional group Q is an amino group, a monoalkylamino group, an aryl group, especially a phenyl group, a hydroxyl group, an acryloyl group, acryloyloxy group, methacryloyl group or a methacryloyloxy group, an epoxy group, especially a glycidyl or glycidyloxy group, and/or an isocyano group.

11. Use according to any one of Claims 4 to 10, **characterized in that** the functional group Q is an amino group, an epoxy group, a hydroxyl group and/or phenyl group.

12. Use according to any one of the preceding claims, **characterized in that** the carbon nanotubes (CNTs) are single-wall carbon nanotubes (SWNTs), double-wall carbon nanotubes (DWNTs) or multi-wall carbon tubes (MWNTs).

13. Wood material board, especially a woodchip board and/or woodfibre board, comprising modified carbon nanotubes according to any one of Claims 4 to 12.

## Revendications

1. Utilisation de nanotubes de carbone pour la réduction de l'émission de composés organiques volatils (COV) dans les panneaux de matériaux à base de bois.

2. Utilisation selon la revendication 1, **caractérisée en ce que** les nanotubes de carbone sont utilisés pour la réduction des aldéhydes libérés à partir des particules de bois utilisées dans les panneaux de matériaux à base de bois, notamment des aldéhydes en C1-C10, de manière particulièrement préférée du formaldéhyde, de l'acétaldéhyde, du pentanal, de l'hexanal.

3. Utilisation selon la revendication 1 ou 2, **caractérisée en ce que** les nanotubes de carbone sont utilisés pour la réduction des terpènes libérés à partir des particules de bois utilisées dans les panneaux de matériaux à base de bois, notamment des monoterpènes en C10 et des sesquiterpènes en C15, de manière particulièrement préférée des monoterpènes acycliques ou cycliques.

4. Utilisation selon l'une quelconque des revendications précédentes, **caractérisée en ce que** la surface des nanotubes de carbone est modifiée avec au moins un groupe de formule générale (I)
-SiRₐX₍₃₋ₐ₎ (I)
dans laquelle
- X représente H, OH ou un radical hydrolysable choisi dans le groupe comprenant halogène, alcoxy, carboxy, amino, monoalkylamino ou dialkylamino, aryloxy, acyloxy, alkylcarbonyle,
- R représente un radical organique non hydrolysable R choisi dans le groupe comprenant alkyle substitué et non substitué, aryle substitué et non substitué, alcényle substitué et non substitué, alcynyle substitué et non substitué, cycloalkyle substitué et non substitué, cycloalcényle substitué et non substitué, qui peuvent être interrompus par -0- ou -NH-,
- R comprenant éventuellement au moins un groupe fonctionnel Q, qui est choisi dans un groupe contenant un groupe aryle, époxyde, hydroxy, éther, amino, monoalkylamino, dialkylamino, anilino substitué et non substitué, amide, carboxy, alcynyle, acryle, acryloxy, méthacryle, méthacryloxy, mercapto, cyano, alcoxy, isocyanato, aldéhyde, alkylcarbonyle, anhydride d'acide et/ou acide phosphorique, et
- a = 0, 1, 2, notamment 1 ou 2.

5. Utilisation selon la revendication 4, **caractérisée en ce que** le ou les groupes de formule générale (I) sont reliés par au moins un groupe de liaison L à la surface des nanotubes de carbone.

6. Utilisation selon la revendication 4 ou 5, **caractérisée en ce que** le ou les groupes de liaison L sont choisis dans le groupe contenant -CO₂-, -CO-, -CONH-, -C₆H₄CO₂-, -C₆H₄CO-, C₆H₄CONH-, une chaîne alkylène selon - (CₙH₂ₙ) -, une chaîne alcénylène selon - (CnH2n-2) - et/ou une chaîne alcynylène selon - (CₙH₂ₙ₋₄) -, avec n ≥ 1, de préférence 2 à 20, de manière particulièrement préférée 2 à 10.

7. Utilisation selon l'une quelconque des revendications 4 à 6, **caractérisée en ce que** X est choisi dans un groupe contenant fluor, chlore, brome, iode, alcoxy en C₁₋₆, notamment méthoxy, éthoxy, n-propoxy et butoxy, aryloxy en C₆₋₁₀, notamment phénoxy, acyloxy en C₂₋₇, notamment acétoxy ou propionoxy, alkylcarbonyle en C₂₋₇, notamment acétyle, monoalkylamino ou dialkylamino en C₁ à C₁₂, notamment C₁ à C₆.

8. Utilisation selon l'une quelconque des revendications 4 à 7, **caractérisée en ce que** R est choisi dans un groupe comprenant alkyle en C₁-C₃₀ substitué et non substitué, notamment alkyle en C₅-C₂₅, alcényle en C₂-C₆ substitué et non substitué, cycloalkyle en C₃-C₈ substitué et non substitué, et cycloalcényle en C₃-C₈ substitué et non substitué.

9. Utilisation selon l'une quelconque des revendications 4 à 8, **caractérisée en ce que** R est choisi dans le groupe contenant méthyle, éthyle, n-propyle, isopropyle, n-butyle, s-butyle, t-butyle, pentyle, hexyle, cyclohexyle, vinyle, 1-propényle, 2-propényle, butényle, acétylényle, propargyle, butadiényle substitué et non substitué, ou cyclohexadiényle substitué et non substitué.

10. Utilisation selon l'une quelconque des revendications 4 à 9, **caractérisée en ce que** le groupe fonctionnel Q est un groupe amino, un groupe monoalkylamino, un groupe aryle, notamment un groupe phényle, un groupe hydroxy, un groupe acryle, un groupe acryloxy, un groupe méthacryle ou un groupe méthacryloxy, un groupe époxyde, notamment glycidyle ou glycidyloxy, et/ou un groupe isocyano.

11. Utilisation selon l'une quelconque des revendications 4 à 10, **caractérisée en ce que** le groupe fonctionnel Q est un groupe amino, un groupe époxyde, un groupe hydroxy et/ou un groupe phényle.

12. Utilisation selon l'une quelconque des revendications précédentes, **caractérisée en ce que** les nanotubes de carbone (CNT) sont des nanotubes de carbone monoparois (SWNT), des nanotubes de carbone biparois (DWNT) ou des nanotubes de carbone multiparois (MWNT).

13. Panneau de matériau à base de bois, notamment panneau de particules de bois et/ou panneau de fibres de bois, comprenant des nanotubes de carbone modifiés selon l'une quelconque des revendications 4 à 12.
